# EUROPEAN PATENT APPLICATION

(11) **EP 4 382 292 A1**
(43) Date of publication of application: **12.06.2024**
(21) Application number: 22852830.3
(22) Date of filing: 19.07.2022
(51) Int. Cl.: B32B 27/30, B32B 27/00

(54) **MULTILAYER FILM**

(30) Priority: 06.08.2021 JP 2021130097; 05.04.2022 JP 2022063103
(71) Applicant: Denka Company Limited, Tokyo 103-8338 (JP)
(72) Inventor: YASUMOTO,Noriaki, Tokyo 103-8338 (JP); MIYAMURA,Yasushi, Tokyo 103-8338 (JP); TAKANO,Keiji, Tokyo 103-8338 (JP)
(74) Representative: Mewburn Ellis LLP
(86) International application number: PCT/JP2022/028097
(87) International publication number: WO 2023/013406

(57) **Abstract**

A multilayer film includes: a surface layer composed of a resin composition containing vinylidene fluoride-based resin and methacrylic acid ester-based resin; and a back layer laminated on the surface layer composed of a resin composition containing vinylidene fluoride-based resin and methacrylic acid ester-based resin, and further containing fine particles with a particle diameter of 0.2 µm or more; wherein an average particle diameter of the fine particles is less than 1.0 µm, a number of convex portions existing on an outer surface of the back layer having a height of 0.2 µm or more relative to an average surface that is counted using a white interferometer is 400 or less per area of 697 µm × 539 µm, and a number of convex portions having a height of 1.0 µm or more is 10 or less per area of 697 µm × 539 µm.

## Description

### FIELD OF THE INVENTION

The present invention relates to a multilayer film. In particular, the present invention relates to a multilayer film that can be applied as the outermost layer of a decorative film.

### BACKGROUND OF THE INVENTION

Conventionally, resin films containing vinylidene fluoride-based resins have excellent weather resistance and chemical resistance, so they have been suitably used as the outermost layer (generally referred to as a "protective layer") of decorative films used for the interior or exterior of automobiles, electrical appliance parts, and the like. Decorative films are generally manufactured through a process of bonding a decorative layer to the film of the outermost layer. Common methods for bonding include lamination using an adhesive and thermal lamination.

In recent years, designs have become more diversified and complex, especially for automobile interiors, and the outermost layer of decorative films is required to have high transparency so as not to impair color and texture. Particularly, among decorative films, a metallic decorative film produced by performing metal vapor deposition on a resin film for the purpose of imparting a metallic design is required to have an outermost layer with high transparency. For this reason, techniques have been developed to improve the transparency of resin films containing vinylidene fluoride-based resins.

In order to provide a film with high crystallinity, transparency, and surface smoothness, Patent Literature 1 (WO 2011/142453) proposes a film comprising a vinylidene fluoride-based resin (A) and an acrylic-based resin (B), wherein an arithmetic mean roughness of at least one surface is 0.1 to 20 nm, a heat of crystal fusion measured by differential scanning calorimeter is 18 to 40 J/g, and a haze value is 3.5 or less.

Patent Literature 2 (Japanese Patent Application Publication No. 2012-187934) describes a new fluororesin film that can be used for vehicle interior and exterior parts and has excellent transparency, surface hardness, chemical resistance, and stain resistance was successfully produced by using a fluorine-based (meth)acrylic resin comprising a fluorine-containing alkyl (meth)acrylate polymer component. Further, this literature specifically discloses a fluororesin laminated acrylic resin film in which a fluororesin film layer is laminated on at least one side of a film layer of acrylic resin (A), wherein the fluororesin film layer is formed by molding a fluororesin (C) comprising a fluorine-based (meth)acrylic resin (B) containing a fluorine-containing alkyl (meth)acrylate polymer component.

Patent Literature 3 (Japanese Patent Application Publication No. 2021-123082) discloses that clouding of a film can be prevented by providing a protective layer of a plurality of mixed resin layers containing vinylidene fluoride-based resin and acrylic acid ester-based resin.

### PRIOR ART

### Patent Literature

[Patent Literature 1] WO 2011/142453
[Patent Literature 2] Japanese Patent Application Publication No. 2012-187934
[Patent Literature 3] Japanese Patent Application Publication No. 2021-123082

### SUMMARY OF THE INVENTION

As described above, techniques for improving the transparency and the like of a resin film used as the outermost layer of a decorative film are known. However, since the resin film is often provided as a film roll wound up into a roll, there is a problem in that the films tend to stick to each other (blocking) during storage. When the resin film is fed out from the film roll, if the resin films are peeled off from each other, the surface of the resin film becomes rough. Therefore, considering the application to decorative films that require an excellent appearance, especially metallic decorative films (for example, metallic decorative films with a metallic mirror-like appearance), conventional resin films still have room for improvement.

In addition, high transparency of the resin film is an important characteristic. However, sufficient study has not been conducted to prevent the design from being distorted when the design applied to the decorative layer is viewed through the protective layer. In order to suppress distortion, it is advantageous for the resin film to have smoothness. However, blocking resistance and smoothness are contradictory properties, and a resin film that has both such properties does not yet exist.

The present invention has been created in view of the above circumstances, and in one embodiment, an object of the present invention is to provide a multilayer film that has both blocking resistance and smoothness.

As a result of intensive research to solve the above problems, the present inventor has found that, in a multilayer film comprising a surface layer composed of a resin composition containing a vinylidene fluoride-based resin and a methacrylic acid ester-based resin, and a back layer composed of a resin composition containing a methacrylic acid ester-based resin, it is effective to solve the problem by adding fine particles with a particle diameter of 0.2 µm or more to the back layer and adjusting convex portions that may locally exist on the outer surface of the back layer. The present invention has been achieved accordingly, and is exemplified as below.

[1] A multilayer film, comprising:
   a surface layer composed of a resin composition comprising 60 to 80 parts by mass of a vinylidene fluoride-based resin and 20 to 40 parts by mass of a methacrylic acid ester-based resin, with respect to a total of the vinylidene fluoride-based resin and the methacrylic acid ester-based resin of 100 parts by mass; and
   a back layer laminated on the surface layer composed of a resin composition comprising 0 to 30 parts by mass of a vinylidene fluoride-based resin and 70 to 100 parts by mass of a methacrylic acid ester-based resin, with respect to a total of the vinylidene fluoride-based resin and the methacrylic acid ester-based resin of 100 parts by mass, and further comprising fine particles with a particle diameter of 0.2 µm or more;
   wherein an average particle diameter of the fine particles is less than 1.0 µm,
   wherein a number of convex portions existing on an outer surface of the back layer having a height of 0.2 µm or more relative to an average surface that is counted using a white interferometer is 400 or less per area of 697 µm × 539 µm, and
   wherein a number of convex portions existing on the outer surface of the back layer having a height of 1.0 µm or more relative to the average surface that is counted using a white interferometer is 10 or less per area of 697 µm × 539 µm.
[2] The multilayer film according to [1], wherein a content of the fine particles contained in the back layer is 0.1 parts by mass or more and 2 parts by mass or less, with respect to the total of 100 parts by mass of the vinylidene fluoride-based resin and the methacrylic acid ester-based resin in the back layer.
[3] The multilayer film according to [1] or [2], wherein an arithmetic mean height (Sa) of the outer surface of the back layer according to ISO 25178, measured using a white interferometer, is 0.05 µm or less.
[4] The multilayer film according to any one of [1] to [3], wherein a haze measured based on JIS K7136: 2000 is 5% or less.
[5] A decorative film, comprising:
   the multilayer film according to any one of [1] to [4], and
   a decorative layer that is laminated directly or indirectly on a side of the back layer of the multilayer film and is provided with a design by one or more types selected from printing, vapor deposition, painting, laminating, and coloring.

According to one embodiment of the present invention, a multilayer film having both blocking resistance and smoothness can be obtained. The multilayer film can be used by being attached to a base material, and can be suitably used, for example, as the outermost layer of a decorative film, especially a metallic decorative film.

### BRIEF DESCRIPTION OF THE DRAWINGS

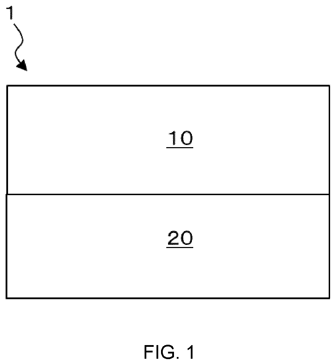

FIG. 1 is a schematic cross-sectional view showing a laminated structure of a film according to one embodiment of the present invention.

### DETAILED DESCRIPTION OF THE INVENTION

Hereinafter, embodiments of the present invention will now be described. The embodiments described below are illustrative examples of typical embodiments of the present invention, and are not intended to narrow the technical scope of the present invention.

FIG. 1 shows a schematic cross-sectional view showing the laminated structure of a multilayer film 1 according to one embodiment of the present invention. The multilayer film 1 has a laminated structure comprising at least a surface layer 10 and a back layer 20 laminated on the surface layer 10 in this order. Typically, the surface layer 10 and the back layer 20 are directly bonded to each other without any other resin layer interposed between them.

### (1. Surface layer)

In one embodiment, the surface layer comprises a vinylidene fluoride-based resin and a methacrylic acid ester-based resin. The mixing ratio of vinylidene fluoride-based resin and methacrylic acid ester-based resin in the surface layer is preferably vinylidene fluoride-based resin : methacrylic acid ester-based resin = 60 to 80 parts by mass : 20 to 40 parts by mass, more preferably 62.5 to 77.5 parts by mass : 22.5 to 37.5 parts by mass, and even more preferably 65 to 75 parts by mass : 25 to 35 parts by mass, for a total of 100 parts by mass of both. When the vinylidene fluoride-based resin is 60 parts by mass or more with respect to a total of 100 parts by mass of the vinylidene fluoride-based resin and the methacrylic acid ester-based resin, properties such as chemical resistance, weather resistance, and stain resistance can be improved. Furthermore, by containing a small amount of methacrylic acid ester-based resin in the surface layer, adhesiveness and adhesion with the back layer can be improved.

In this specification, vinylidene fluoride-based resin refers to a homopolymer of vinylidene fluoride, as well as a copolymer of vinylidene fluoride with a monomer that is copolymerizable with vinylidene fluoride, whose particle diameter in the film is less than 0.2 µm (including particles so fine that the particle diameter cannot be specified and particles forming a matrix phase). In other words, resin particles having a particle diameter of 0.2 µm or more in the film are not included in the vinylidene fluoride-based resin in this specification.

When the film is pinched and fixed in a small metal vise, and cut with a single-edged knife such that the cross-section of the film is smooth, and the cross-section of the film is observed at a magnification of 2000x using a confocal laser microscope (for example, VK-X1 10 manufactured by Keyence Corporation) with the film pinched in the vise, the particle diameter of a resin particle refers to the diameter of the smallest circle that can surround the resin particle.

Examples of monomers that is copolymerizable with vinylidene fluoride include vinyl fluoride, tetrafluoroethylene, hexafluoropropylene, hexafluoroisobutylene, chlorotrifluoroethylene, various fluorinated alkyl vinyl ethers, as well as known vinyl monomers such as styrene, ethylene, butadiene, and propylene, and the like. These can be used alone or in combination of two or more. Among these, at least one selected from vinyl fluoride, tetrafluoroethylene, hexafluoropropylene, and chlorotrifluoroethylene is preferred, and hexafluoropropylene is more preferred.

Therefore, the surface layer preferably comprises (A) one or two selected from a copolymer of vinylidene fluoride with hexafluoropropylene, and polyvinylidene fluoride (PVDF homopolymer), and (B) a methacrylic acid ester-based resin; wherein with respect to 100 parts by mass of the total of (A) and (B), the total of (A) is 60 parts by mass or more and 80 parts by mass or less, (B) is 20 parts by mass or more and 40 parts by mass or less, more preferably the total of (A) is 62.5 parts by mass or more and 77.5 parts by mass or less, (B) is 22.5 parts by mass or more and 37.5 parts by mass or less, and even more preferably the total of (A) is 65 parts by mass or more and 75 parts by mass or less, and (B) is 25 parts by mass or more and 35 parts by mass or less.

Examples of the polymerization reaction for obtaining the vinylidene fluoride-based resin include known polymerization reactions such as radical polymerization and anionic polymerization. Further, examples of the polymerization method include known polymerization methods such as suspension polymerization and emulsion polymerization. The mechanical properties of the resulting resin vary depending on the polymerization reaction and/or polymerization method.

In this specification, methacrylic acid ester-based resin refers to a homopolymer of methacrylic acid ester such as methyl methacrylate, and a copolymer of methacrylic acid ester with a monomer that is copolymerizable with the methacrylic acid ester, whose particle diameter in the film is less than 0.2 µm (including particles so fine that the particle diameter cannot be specified and particles forming a matrix phase). In other words, resin particles having a particle diameter of 0.2 µm or more in the film are not included in the methacrylic acid ester-based resin in this specification.

Monomers that is copolymerizable with methacrylic acid ester include: (meth)acrylic acid esters such as butyl acrylate, butyl methacrylate, ethyl acrylate, and ethyl methacrylate; aromatic vinyl monomers such as styrene, α-methylstyrene, p-methylstyrene, o-methylstyrene, t-butylstyrene, divinylbenzene, tristyrene; vinyl cyanide monomers such as acrylonitrile and methacrylonitrile; glycidyl group-containing monomers such as glycidyl (meth)acrylate; vinyl carboxylate-based monomers such as vinyl acetate and vinyl butyrate; olefin-based monomers such as ethylene, propylene, isobutylene; diene-based monomers such as 1 ,3-butadiene and isoprene; unsaturated carboxylic acid monomers such as maleic acid, maleic anhydride, (meth)acrylic acid; enone-based monomers such as vinyl methyl ketone; and the like. These can be used alone or in combination of two or more. Among these, from the viewpoint of film strength and flexibility, a homopolymer of methyl methacrylate, or an acrylic rubber-modified methacrylic copolymer obtained by copolymerizing an acrylic rubber containing butyl (meth)acrylate with a monomer mainly composed of methyl methacrylate is preferred.

Examples of the polymerization reaction for obtaining the methacrylic acid ester-based resin include known polymerization reactions such as radical polymerization, living radical polymerization, living anionic polymerization, and living cationic polymerization. Further, examples of the polymerization method include known polymerization methods such as bulk polymerization, suspension polymerization, emulsion polymerization, and solution polymerization. The mechanical properties of the resulting resin vary depending on the polymerization reaction and polymerization method.

Types of copolymers of vinylidene fluoride-based resin and methacrylic acid ester-based resin include random copolymers, graft copolymers, block copolymers (for example, diblock copolymers, triblock copolymers, linear types such as gradient copolymers, star-shaped copolymers polymerized by the arm-first method or core-first method, and the like), and copolymers obtained by polymerization using macromonomers, which are polymeric compounds with polymerizable functional groups (macromonomer copolymers), and mixtures thereof. Among these, graft copolymers and block copolymers are preferred from the viewpoint of resin productivity.

The lower limit of the melting point of the vinylidene fluoride-based resin is preferably 150 °C or higher, more preferably 160 °C or higher. The upper limit of the melting point of the vinylidene fluoride-based resin is preferably 170 °C or lower, which is equal to the melting point of polyvinylidene fluoride (PVDF).

The lower limit of the glass transition point (Tg) of the methacrylic acid ester-based resin is preferably 70 °C or higher, more preferably 80 °C or higher. The upper limit of Tg of the methacrylic acid ester-based resin is preferably 120 °C or lower.

The melting point of the vinylidene fluoride-based resin and the Tg of the methacrylic acid ester-based resin can be measured by heat flux differential scanning calorimetry (heat flux DSC). For example, using a differential scanning calorimeter DSC3100SA manufactured by Bruker AXS, it can be determined from the DSC curve (first run) obtained when a sample mass of 1.5 mg is heated from room temperature to 200 °C at a heating rate of 10 °C/min.

In addition to the vinylidene fluoride-based resin and methacrylic acid ester-based resin, the surface layer can appropriately comprise other resins, plasticizers, heat stabilizers, antioxidants, light stabilizers, crystal nucleating agents, anti-blocking agents, sealability improvers, mold release agents, colorants, pigments, foaming agents, flame retardants, and the like, within a range that does not impair the object of the present invention. However, in general, the total amount of the vinylidene fluoride-based resin and methacrylic acid ester-based resin in the film constituting the surface layer is 80% by mass or more, typically 90% by mass or more, more typically 95% by mass or more, and can even be 100% by mass.

In a preferred embodiment, the surface layer may comprise (A) one or two selected from a copolymer of vinylidene fluoride with hexafluoropropylene, and polyvinylidene fluoride (PVDF homopolymer), and (B) a methacrylic acid ester-based resin; wherein the total of (A) and (B) is 80% by mass or more, typically 90% by mass or more, more typically 95% by mass or more, and can even be 100% by mass.

Although an ultraviolet absorber may be added to the surface layer, it is preferable not to add it from the viewpoint of cost and bleed-out.

The average thickness of the surface layer is preferably 1 to 40 µm, more preferably 5 to 35 µm, even more preferably 8 to 30 µm, and particularly preferably 10 to 20 µm. When the average thickness of the film is 1 µm or more, film formability is improved and the protective function when used as the outermost layer can be improved, and when it is 40 µm or less, transparency can be improved and costs can be reduced. The surface layer may be formed as a single layer or as a plurality of layers, but it is desirable that the total average thickness falls within the above-mentioned average thickness. The average thickness of the surface layer can be calculated as the average value obtained by measuring the thickness at multiple locations by observing the cross-section of the surface layer using a confocal laser microscope.

### (2. Back layer)

In one embodiment, the back layer comprises a methacrylic acid ester-based resin as the main component. Specifically, the back layer comprises 70% by mass or more of a methacrylic acid ester-based resin in order to improve blocking resistance and transparency. Although the back layer may not comprise vinylidene fluoride-based resin, it is preferable that the back layer comprises vinylidene fluoride-based resin since scraps of the multilayer film produced during the manufacturing process can be reused as the back layer. Specifically, the mixing ratio of vinylidene fluoride-based resin and methacrylic acid ester-based resin in the back layer is preferably vinylidene fluoride-based resin : methacrylic acid ester-based resin = 0 to 30 parts by mass : 70 to 100 parts by mass, more preferably 0 to 20 parts by mass : 80 to 100 parts by mass, and even more preferably 0 to 10 parts by mass : 90 to 100 parts by mass, for a total of 100 parts by mass of both.

The definitions and embodiments of the vinylidene fluoride-based resin and the methacrylic acid ester-based resin, including their preferred embodiments, are the same as described in the surface layer, so repeated explanations are omitted here.

In one embodiment, the back layer comprises fine particles having a particle diameter of 0.2 µm or more in addition to the methacrylic acid ester-based resin. When the back layer comprises fine particles, appropriate unevenness is generated on the outer surface of the surface layer, improving blocking resistance. Such fine particles are unnecessary and preferably not present in the surface layer. In typical embodiments, the fine particles are present dispersed within the matrix of the backing layer. The material of the fine particles is not particularly limited, but resin particles are preferred, and crosslinked (meth)acrylic acid-based resin particles are more preferred. Crosslinked (meth)acrylic acid ester-based resin particles have a refractive index similar to that of the methacrylic acid ester-based resin that is the main component of the back layer, so even if they are dispersed in the methacrylic acid ester-based resin, they have the characteristic that it does not easily impair the transparency of the film.

In this specification, the particle diameter of the fine particles refers to the diameter of the smallest circle that can surround the resin particles when the film is observed by the method described above. Therefore, even if there is a particulate crosslinked (meth)acrylic acid ester-based resin, if its particle diameter in the film is less than 0.2 µm, it belongs to the methacrylic acid ester-based resin as long as it satisfies the above definition regarding the methacrylic acid ester-based resin.

The fine particles preferably have an average particle diameter of less than 1.0 µm. By having the fine particles preferably have an average particle diameter of less than 1.0 µm, more preferably 0.98 µm or less, and even more preferably 0.96 µm or less, the smoothness of the film can be improved without making the outer surface of the back layer too uneven. Further, from the viewpoint of improving blocking resistance, the average particle diameter of the fine particles is preferably 0.20 µm or more, more preferably 0.40 µm or more, and even more preferably 0.60 µm or more. Therefore, by way of example, the average particle diameter of the fine particles is preferably 0.20 to 1.0 µm, more preferably 0.40 to 0.98 µm, and even more preferably 0.60 to 0.96 µm. In this specification, the average particle diameter of fine particles refers to the D50 value (volume basis) of particle diameter distribution measured by a laser diffraction / scattering method.

The average thickness of the back layer is preferably 10 to 100 µm, more preferably 15 to 90 µm, even more preferably 20 to 85 µm, and particularly preferably 25 to 80 µm. When the average thickness of the film is 10 µm or more, film formability is improved and the protective function when used as the protective layer of a decorative film can be improved, and by setting the thickness to 100 µm or less, improved transparency and processability can be achieved. The back layer may be formed in a single layer or in multiple layers, but it is desirable that the total average thickness falls within the above-mentioned average thickness. The average thickness of the back layer can be calculated as the average value obtained by measuring the thickness at multiple locations by observing the cross-section of the back layer using a confocal laser microscope.

Examples of crosslinked (meth)acrylic acid ester-based resin particles include, but are not limited to, crosslinked polymethyl acrylate, crosslinked polyethyl acrylate, crosslinked polymethyl methacrylate, crosslinked polyethyl methacrylate, crosslinked polynormal butyl methacrylate, and the like. These can be used alone or in combination of two or more. Among these, it is preferable to contain crosslinked polymethyl methacrylate because the difference in refractive index with the methacrylic acid ester-based resin constituting the matrix is small. Even when heat is applied during film production, the crosslinked (meth)acrylic acid ester-based resin particles tend to be maintained without being compatible with the methacrylic acid ester-based resin constituting the matrix due to the crosslinked structure.

A smaller amount of fine particles in the back layer can improve smoothness and transparency, while a larger amount can improve blocking resistance. Therefore, from the viewpoint of having smoothness, transparency, and anti-blocking properties, the formulation amount of the fine particles is preferably 0.1 parts by mass or more and 2 parts by mass or less, more preferably 0.2 parts by mass or more and 0.8 parts by mass or less, and even more preferably 0.3 parts by mass or more and 0.7 parts by mass or less, with respect to a total of 100 parts by mass of the vinylidene fluoride-based resin and the methacrylic acid ester-based resin in the back layer.

In addition to the methacrylic acid ester-based resin, the vinylidene fluoride-based resin, and the fine particles, the back layer can appropriately comprise ultraviolet absorbers, other resins, plasticizers, heat stabilizers, antioxidants, light stabilizers, crystal nucleating agents, anti-blocking agents, sealability improvers, mold release agents, colorants, pigments, foaming agents, flame retardants, and the like, within a range that does not impair the object of the present invention. However, in general, the total amount of the methacrylic acid ester-based resin, the vinylidene fluoride-based resin, and the fine particles in the back layer is 90% by mass or more, typically 95% by mass or more, more typically 97% by mass or more, and can even be 100% by mass.

The back layer preferably comprises an ultraviolet absorber. When the back layer comprises an ultraviolet absorber, ultraviolet rays are blocked and weather resistance can be effectively improved. Examples of ultraviolet absorbers include, but are not limited to, hydroquinone, triazine, benzotriazole, benzophenone, cyanoacrylate, oxalic acid, hindered amine, salicylic acid derivatives, and the like. These can be used alone or in combination of two or more. Among these, it is preferable to contain a triazine compound, a benzotriazole compound, or a mixture thereof, from the viewpoint of sustainability of the ultraviolet blocking effect.

The formulation amount of the ultraviolet absorber in the back layer is preferably 0.1 to 10 parts by weight, with respect to a total of 100 parts by mass of the vinylidene fluoride-based resin and the methacrylic acid ester-based resin in the back layer. By setting the formulation amount of the ultraviolet absorber in the back layer to 0.1 parts by mass or more, preferably 1 part by mass or more, and more preferably 2 parts by mass or more, with respect to the total of 100 parts by mass of the vinylidene fluoride-based resin and the methacrylic acid ester-based resin in the back layer, it is possible to expect an effect of improving weather resistance as well as an effect of absorbing ultraviolet rays. In addition, by setting the formulation amount of the ultraviolet absorber in the back layer to 10 parts by mass or less, preferably 5 parts by mass or less, with respect to the total of 100 parts by mass of the vinylidene fluoride-based resin and the methacrylic acid ester-based resin in the back layer, it is possible to prevent the ultraviolet absorber from bleeding out onto the film surface and realize cost reduction.

### (3. Characteristics of multilayer film)

According to the multilayer film of one embodiment of the present invention, a number of convex portions existing on the outer surface of the back layer having a height of 0.2 µm or more relative to the average surface that is counted using a white interferometer is 400 or less per area of 697 µm × 539 µm, and a number of convex portions existing on the outer surface of the back layer having a height of 1.0 µm or more relative to the average surface that is counted using a white interferometer is 10 or less per area of 697 µm × 539 µm. Satisfying this condition means that the outer surface of the back layer has high smoothness, which contributes to suppressing distortion of the design applied to the decorative layer or the like existing in the lower layer of the multilayer film that is visible through the multilayer film.

The number of convex portions existing on the outer surface of the back layer having a height of 0.2 µm or more relative to the average surface that is counted using a white interferometer is preferably 400 or less, more preferably 300 or less, and even more preferably 200 or less, per area of 697 µm × 539 µm. In addition, from the viewpoint of improving blocking resistance, the number of convex portions having a height of 0.2 µm or more is preferably 30 or more, more preferably 50 or more, and even more preferably 100 or more, per area of 697 µm × 539 µm. Therefore, for example, the number of convex portions having a height of 0.2 µm or more is preferably 30 or more and 400 or less, more preferably 50 or more and 300 or less, and even more preferably 100 or more and 200 or less, per area of 697 µm ×539 µm.

The number of convex portions existing on the outer surface of the back layer having a height of 1.0 µm or more relative to the average surface that is counted using a white interferometer is 10 or less, more preferably 8 or less, and even more preferably 6 or less, per area of 697 µm × 539 µm. There is no particular lower limit to the number of convex portions having a height of 1.0 µm or more, and from the viewpoint of smoothness and transparency, 0 is most preferable, but from the viewpoint of ease of manufacture, it is typical that the number is 1 or more per area of 697 µm × 539 µm.

In the multilayer film according to one embodiment of the present invention, the surface layer does not need to contain fine particles. Therefore, the surface layer can have higher smoothness than the back layer. Therefore, the number of convex portions existing on the outer surface of the surface layer having a height of 0.2 µm or more relative to the average surface that is counted using a white interferometer is preferably 300 or less, more preferably 200 or less, and even more preferably 100 or less, per area of 697 µm × 539 µm. There is no particular lower limit to the number of convex portions having a height of 0.2 µm or more, and from the viewpoint of smoothness and transparency, 0 is most preferable, but from the viewpoint of ease of manufacture, it is typical that the number is 1 or more per area of 697 µm × 539 µm.

Similarly, the number of convex portions existing on the outer surface of the surface layer having a height of 1.0 µm or more relative to the average surface that is counted using a white interferometer is 10 or less, more preferably 8 or less, and even more preferably 6 or less, per area of 697 µm × 539 µm. There is no particular lower limit to the number of convex portions having a height of 1.0 µm or more, and from the viewpoint of smoothness and transparency, 0 is most preferable, but from the viewpoint of ease of manufacture, it is typical that the number is 1 or more per area of 697 µm × 539 µm.

Regarding the multilayer film according to one embodiment of the present invention, the arithmetic mean height (Sa) of the outer surface of the back layer according to ISO 25178, measured using a white interferometer, is 0.05 µm or less. Sa represents the average of the absolute values of the height difference at each point with respect to the average surface of the outer surface of the back layer to be measured. Further, the average surface specified when measuring Sa is the same as the average surface when determining the height of the convex portion described above.

It is advantageous from the viewpoint of improving smoothness that the number of convex portions is controlled as described above and that Sa is 0.05 µm or less. However, if the number of convex portions is not controlled, even if Sa is 0.05 µm or less, it cannot be said that there is sufficient smoothness. This is because Sa alone cannot ensure suppression of local distortion. In order to suppress distortion of the visually recognized design, it is important to control the number of relatively large convex portions as described above. The upper limit of Sa on the outer surface of the back layer is preferably 0.04 µm or less, more preferably 0.03 µm or less. The lower limit of Sa on the outer surface of the back layer is preferably 0.01 µm or more from the viewpoint of improving blocking resistance.

Regarding the multilayer film according to one embodiment of the present invention, the arithmetic mean height (Sa) of the outer surface of the surface layer according to ISO 25178, measured using a white interferometer, is 0.05 µm or less. The upper limit of Sa on the outer surface of the surface layer is preferably 0.04 µm or less, more preferably 0.03 µm or less. The lower limit of Sa on the outer surface of the surface layer is not particularly set, but from the viewpoint of ease of manufacture, it is generally 0.01 µm or more, and typically 0.02 µm or more.

From the viewpoint of increasing transparency, the haze of the multilayer film according to one embodiment of the present invention measured based on JIS K7136: 2000 is preferably 5% or less, more preferably 4% or less, and for example, it can be in the range of 1 to 5%.

From the viewpoint of increasing transparency, the total light transmittance of the multilayer film according to one embodiment of the present invention measured based on JIS K7361-1: 1997 is preferably 80% or more, more preferably 85% or more, even more preferably 90% or more, and for example, it can be 80 to 95%.

### (4. Manufacturing method of multilayer film)

The multilayer film according to one embodiment of the present invention can be manufactured, for example, by a melt coextrusion molding method in which a plurality of resins is adhesively laminated in a molten state using a plurality of extrusion molding machines. The melt coextrusion molding method includes a multi-manifold die method in which a plurality of resins is made into sheets and then each layer is bonded in contact at the tip inside a T-die; a feedblock die method in which a plurality of resins is bonded together in a merging device (feedblock) and then spread into a sheet; and a dual slot die method in which a plurality of resins is molded into a sheet, and then each layer is contacted and bonded at the tip of the outside of a T-die. In addition, it can also be manufactured by an inflation molding method using a round die.

The multilayer film can be manufactured, for example, by performing the following steps.

Step 1: a step of melt-coextrusion molding a resin composition for the surface layer and a resin composition for the back layer into a film from a T-die at a temperature of 200 to 260 °C, such that the average thickness of the resin composition for the surface layer is 1 to 40 µm, and the average thickness of the resin composition for the back layer is 10 to 100 µm,

Step 2: after extrusion from the exit of the T-die, a step of cooling at least the surface of the melt-coextrusion molded film on the side of the resin composition for the surface layer by bringing it into contact with the surface of a metal roll whose temperature is controlled to 20 to 60 °C.

When manufacturing a film with a thickness of about 30 to 50 µm under the above conditions, it is appropriate to set the film transport speed to 5 to 9 m/min. Further, from the viewpoint of removing foreign matter, when a screen mesh is installed in the extruder, the opening of the mesh needs to be adjusted to a size that allows the above-described fine particles to pass through.

Examples of methods for controlling the temperature on the surface of the metal roll include a method of circulating a cooling medium such as cooling water inside the metal roll.

During cooling, it is more preferred that a rubber touch roll is placed opposite the metal roll, and the laminate of the resin composition for the surface layer and the resin composition for the back layer in a molten state extruded from the outlet of the T-die is pinched between the metal roll (cast roll) and the touch roll, from the viewpoint of transferring the smooth surface of the metal roll to the film. The surface temperature of the rubber touch roll is preferably 0 to 70 °C, more preferably 0 to 30 °C, from the viewpoint of suppressing transfer of the surface shape of the rubber roll.

From the viewpoint of smoothing the surface of the multilayer film, especially smoothing the outer surface of the back layer, it is desirable that the surface roughness of the metal roll is small, and it is further desirable that the surface roughness of the touch roll is also small. This is because the surface roughness of the metal roll and touch roll affects the surface quality of the multilayer film. Therefore, it is preferable that the arithmetic mean roughness Ra on the surface of the metal roll measured based on JIS B0601: 2001 is 100 nm or less, more preferably 80 nm or less, even more preferably 60 nm or less, even more preferably 40 nm or less, even more preferably 20 nm or less, and can be, for example, 10 to 100 nm. The arithmetic mean roughness Ra of the surface of the touch roll measured based on JIS B0601: 2001 is preferably 150 nm or less, more preferably 120 nm or less, and can be, for example, 100 to 150 nm.

### (5. Film laminated on base material)

A base material may be laminated on the multilayer film according to one embodiment of the present invention. Therefore, in one embodiment of the present invention, a film is provided in which a base material is laminated on the surface layer and/or back layer of the multilayer film. It is preferable that the average total thickness of the film on which the base material is laminated is 50 to 1000 µm, from the viewpoint of workability and cost of adhesion to automobile interior parts.

Examples of the base material include layers such as an anker layer, a decorative layer, a protective layer, an adhesive layer, a printed layer, and a metal vapor deposited layer. One type of base material may be used in a single layer, or two or more types may be used in combination and laminated.

In a preferred embodiment, a decorative film, typically a metallic decorative film, is provided in which the multilayer film is laminated as the outermost layer with the surface layer (the film containing vinylidene fluoride-based resin) on the outside.

In one embodiment, the decorative film comprises the multilayer film, and a decorative layer that is laminated directly or indirectly on the side of the back layer of the multilayer film and is provided with a design by one or more types selected from printing, vapor deposition, painting, laminating, and coloring. Here, "laminating" refers to a sheet-shaped decorative layer such as a resin sheet on which a pattern is printed. In one embodiment, the metallic decorative film comprises the multilayer film, an anchor layer, a metal vapor deposited layer, and an adhesive layer in this order, and the multilayer film forms the outermost layer with the surface layer on the outside.

The anchor layer may be, but is not limited to, acrylic resin, nitrocellulose-based resin, polyurethane-based resin (including those cured with polyol resin as the main resin and isocyanate-based resin as curing agent), acrylic urethane-based resins (including those cured with acrylic polyol resin as the main resin and isocyanate-based resin as a curing agent), polyester-based resin, styrene-maleic acid-based resin, chlorinated PP-based resin, and the like. Among these, it is preferable that the anchor layer contains an acrylic resin since the resulting film has better adhesion.

The metal vapor deposited layer can include a metal such as, but not limited to, indium. In addition, the metal vapor deposition layer may include various nonmetals, metals, metal oxides, and metal nitrides.

The adhesive layer can contain various adhesives, adhesives, pressure sensitive adhesives (PSA), and the like.

Examples of methods for laminating a base material on the multilayer film according to one embodiment of the present invention include adhesive lamination and thermal lamination. Other known lamination methods may also be employed. Further, the multilayer film can be subjected to heat forming. Examples of the heat forming method include a method in which a base material is bonded to one or both sides of the multilayer film, and then vacuum forming, pressure forming, or vacuum pressure forming is carried out.

Methods for coating a surface of articles such as automobile interior parts with decorative films, especially metallic decorative films include, for example, film insert molding, in-mold molding, and vacuum lamination molding (including vacuum / pressure molding such as TOM molding). Among these, compared to in-mold molding and vacuum lamination molding, film insert molding has the advantage that the decorative film can follow parts with more complex shapes, achieving good surface coverage, since the decorative film is heated and preformed.

### EXAMPLES

Hereinafter, the present invention will be described in detail based on Examples and in comparison with Comparative Examples.

### (1. Materials)

### <<For surface layer>>

### <Vinylidene fluoride-based resin>

The following material was prepared as vinylidene fluoride-based resin (PVDF).
- Product name Kynar740 (vinylidene fluoride homopolymer, melting point 168°C, specific gravity 1.78g/cm³) manufactured by Arkema (abbreviation: K740)

### <Methacrylic acid ester-based resin>

The following material was prepared as methacrylic acid ester-based resin.
- Sumitomo Chemical Co., Ltd. "Sumipex MGSS" (Tg 101 °C polymethyl methacrylate, specific gravity 1.19g/cm³) (abbreviation: MGSS)

### <<For back layer»

### <Vinylidene fluoride-based resin>

The following material was prepared as vinylidene fluoride-based resin (PVDF).
- Product name Kynar720 (vinylidene fluoride homopolymer, melting point 168 °C, specific gravity 1.78g/cm³) manufactured by Arkema (abbreviation: K720)

### <Methacrylic acid ester-based resin>

The following material was prepared as methacrylic acid ester-based resin.
- "Hipet HBS000" manufactured by Mitsubishi Chemical Corporation (methacrylic acid ester-based resin with a Tg of 97 °C, containing rubber components of butyl acrylate (n-BA) and butyl methacrylate (BMA), specific gravity 1.19 g/cm³) (Abbreviation: HBS000)

### <Crosslinked (meth)acrylic acid ester-based resin particles>

The following materials were prepared as crosslinked (meth)acrylic acid ester-based resin particles.
- "MX-80H3wT" (crosslinked methyl methacrylate-based resin particles) manufactured by Soken Chemical & Engineering Co., Ltd. (average particle diameter = 0.8 µm, specific gravity 1.19 g/cm³)
- "GM-0105" (crosslinked methyl methacrylate-based resin particles) manufactured by Aica Kogyo Company (average particle diameter = 2.5 µm, specific gravity 1.19 g/cm³)
- "GM-0449S-2" (crosslinked methyl methacrylate-based resin particles) manufactured by Aica Kogyo Company (average particle diameter = 3.7 µm, specific gravity 1.19 g/cm³)
- "GM-0806S" (crosslinked methyl methacrylate-based resin particles) manufactured by Aica Kogyo Company (average particle diameter = 8.2 µm, specific gravity 1.19 g/cm³)

In addition, since there was virtually no particle with a particle diameter of less than 0.2 µm in any of the above types of particles, it was possible to assume that the entire amount in the formulation constituted the crosslinked (meth)acrylic acid ester-based resin particles in the film.

The average particle diameter refers to the D50 value (volume basis) of the particle diameter distribution measured using the laser diffraction / scattering method. The D50 value is also referred to as the median diameter, and is the particle diameter at which the cumulative particle diameter distribution from the smaller particle diameter side is 50%. Examples of the measuring device include Mastersizer 2000 (manufactured by Malvern Panalytical).

### <Ultraviolet absorber>

The following materials was prepared as the ultraviolet absorber.
- Triazine-based ultraviolet absorber "Tinuvin (registered trademark) 1600" manufactured by BASF

### (2. Preparation of multilayer film)

According to the test numbers, each compound for the surface layer and for the back layer was obtained after kneading using a twin-screw extruder with a diameter of 30 mm according to the formulations listed in Table 1. The compound for the surface layer and the compound for the back layer were melt-coextrusion molded using two single-screw extruders with a diameter of 40 mm and a feed block type T-die multilayer extruder equipped with a feed block and a T-die at the tip. While conveying at a transport speed of 6.7 m/min, the extruded film-like resin composition was cooled by sandwiching it between a metal roll (surface temperature: about 20 °C) through which cooling water was flowed and a rubber touch roll (surface temperature: about 40 °C), thereby obtaining a multilayer film. Here, when the arithmetic mean roughness Ra of the surface of the metal roll was measured based on JIS B0601: 2001 using a contact type surface roughness meter (Mitutoyo Co., Ltd., SJ210), it was 0.013 µm. When the arithmetic mean roughness Ra of the surface of the touch roll was measured based on JIS B0601: 2001 using a contact type surface roughness meter (Mitutoyo Co., Ltd., SJ210), it was 0.116 µm.

### <3. Film properties>

### (3-1. Film average thickness)

For each film (widthwise length 800 mm) prepared under the above conditions, the cross-section of the film was observed at a magnification of 2000 times using a confocal laser microscope (manufactured by Keyence Corporation, VK-X100) and the thickness of each of the surface layer and the back layer was measured based on the distance between two points. Measurements were performed at any one location in the machine direction (MD) for 17 points at 50 mm intervals in the film transverse direction (TD), and the average value was taken as the measured value. The results are shown in Table 1.

### (3-6. Blocking resistance)

For each film prepared under the above conditions, 10 A4 size sample films were cut out. Ten sheets of the cut sample films were stacked with the same side facing up, a stainless-steel plate was placed on top of the stack, and a 1 kg weight was placed on top of the stainless-steel plate. In this state, it was left at a temperature of 50 °C for 24 hours. Thereafter, the weight was removed, and the edge of the topmost sample film was held with one hand and peeled off in a 90° direction. The blocking resistance was evaluated using the following criteria. The results are shown in Table 1.
Circle: The second and subsequent films from the top do not lift up and can be peeled off smoothly with one hand.
Cross: The second and subsequent films from the top are lifted up.

### <3-3. Arithmetic mean height of back layer (Sa)>

The outer surface of the back layer of each multilayer film prepared under the above conditions was measured using a white interferometer ("Nano 3D Optical Interference Measurement System VS1800" manufactured by Hitachi High-Tech Corporation), and the arithmetic mean height (Sa) was measured according to ISO 25178. The measurement conditions were as follows. The results are shown in Table 1.
- Barrel lens 0.5x, objective lens 50x
- Measurement range: 697µm × 539µm (4 × 3 stitching, overlap rate 30%)
- Measurement mode: wave
- Surface correction: quartic

In addition, the arithmetic mean height (Sa) of the outer surface of the surface layer of the multilayer film was in the range of 0.01 to 0.05 µm in all Examples and Comparative Examples.

### <3-4. Number density of convex portions with a height of 0.2 µm or more and convex portions with a height of 1.0 µm or more>

For the outer surface of the back layer of each multilayer film prepared under the above conditions, using a white interferometer ("Nano 3D Optical Interference Measurement System VS1800" manufactured by Hitachi High-Tech Corporation), the number of convex portions with a height of 0.2 µm or more and the number of convex portions with a height of 1.0 µm or more with respect to the average surface per area of 697 µm × 539 µm was measured. The measurement conditions were as follows. The results are shown in Table 1.
- Barrel lens 0.5x, objective lens 50x
- Measurement range: 697µm × 539µm (4 × 3 stitching, overlap rate 30%)
- Measurement mode: wave
- Surface correction: quartic
- Average surface: the average surface specified during Sa measurement

Regarding the outer surface of the surface layer of the multilayer film, in all Examples and Comparative Examples, the number of convex portions with a height of 0.2 µm or more relative to the average surface per area of 697 µm × 539 µm was in the range of 0 to 10, and the number of convex portions having a height of 1.0 µm or more with respect to the average surface per area of 697 µm × 539 µm was in the range of 0 to 2.

### (3-5. Total light transmittance)

For each film produced prepared the above conditions, the total light transmittance at 25 °C was determined based on JIS K7361-1: 1997 using a haze meter NDH7000 (manufactured by Nippon Denshoku Industries Co., Ltd.). The results are shown in Table 1.

### (3-6. Haze)

For each film prepared under the above conditions, the haze value based on JIS K7136: 2000 at 25 °C was measured using a haze meter NDH7000 (manufactured by Nippon Denshoku Industries Co., Ltd.). The results are shown in Table 1.

### <3-7. Maximum amount of recycled material that can be blended into the back layer>

If the scraps of each multilayer film prepared under the above conditions are reused as recycled materials for the back layer, the formulation amount of the vinylidene fluoride-based resin in the back layer will be increased from the predetermined formulation amount. Here, the maximum amount of recycled material that could be blended was set as the formulation amount of recycled material when the formulation amount of vinylidene fluoride-based resin contained in the back layer was +10%. However, even when blending the recycled material, the formulation number of fine particles should not change. When the formulation amount of fine particles does not vary and the variation in the formulation amount of vinylidene fluoride-based resin was within +10%, the recycled material can be blended without deteriorating transparency, smoothness, and mechanical properties. For example, in Example 5, the back layer contains 5 parts by mass of vinylidene fluoride-based resin, but when blending recycled material, the permissible content of vinylidene fluoride-based resin was up to 5.5 parts by mass. By blending 2 parts by mass of recycled material to a total of 100 parts by mass of vinylidene fluoride-based resin and methacrylic acid ester-based resin, the proportion of vinylidene fluoride-based resin contained in the back layer becomes 5.5 parts by mass. At this time, the mass ratio of vinylidene fluoride-based resin to the mass of recycled material was 30% (The specific gravity of the surface layer was 1.60, and the specific gravity of the back layer was 1.22, which were calculated based on the specific gravity and the formulation amount of each material. The weight ratio of the surface layer to the back layer calculated based on the specific gravity of each layer and the thickness of each layer was 0.39:0.61, the proportion of vinylidene fluoride-based resin contained in the surface layer to the total layers was 70 × 0.39 = 27.3%, and the proportion of vinylidene fluoride-based resin contained in the back layer to the total layers was 5 × 0.61. = 3.05%, and 27.3 + 3.05 = 30.35%). The results are shown in Table 1.

### (4. Discussion)

In the multilayer films of Comparative Examples 1 to 6, the average particle diameter of the fine particles contained in the back layer was too large. Therefore, although the haze and total light transmittance were good, the number density of at least one of the convex portions with a height of 0.2 µm or more and the convex portions with a height of 1.0 µm or more became too high.

In the multilayer film of Comparative Example 7, the content of fine particles contained in the back layer was too large. Therefore, although the haze and total light transmittance were good, the number density of convex portions with a height of 0.2 µm or more became too high.

In the multilayer films of Comparative Examples 8 and 9, the back layer contained less methacrylic acid ester-based resin, and the blocking resistance deteriorated.

The multilayer films of Comparative Examples 9 and 10 had poor blocking resistance because the back layer did not contain fine particles.

On the other hand, in Examples 1 to 10, excellent blocking resistance and high smoothness were obtained because the formulation of the resin composition constituting the surface layer and the back layer and the average particle diameter of the fine particles were appropriate.

**Table 1-1**

| \| | | | Example 1 | \| Example 2 | I Example 3 | Example 4 | Example 5 | Example 6 \| | Example 7 |
|---|---|---|---|---|---|---|---|---|---|
| Back layer | Formulation | Type of methacrylic acid ester-based resins | HBS000 | HBS000 | HBS000 | HBS000 | HBS000 | HBS000 | HBS000 |
| | | Formulation amount [parts by mass] | 100 | 100 | 100 | 100 | 95 | 90 | 85 |
| | | Type of vinylidene fluoride-based resin | | | | | K720 | K720 | K720 |
| | | Formulation amount [parts by mass] | | | | | 5 | 10 | 15 |
| | | Type of UV absorbers | Tinuvin 1600 | Tinuvin 1600 | Tinuvin 1600 | Tinuvin 1600 | Tinuvin 1600 | Tinuvin 1600 | Tinuvin 1600 |
| | | Formulation amount [parts by mass] | 2.1 | 2.1 | 2.1 | 2.1 | 2.1 | 2.1 | 2.1 |
| | | Particle product number | MX-80H3wT | MX-80H3wT | MX-80H3wT | MX-80H3wT | MX-80H3wT | MX-80H3wT | MX-80H3wT |
| | | Particle material | Crosslinked acrylic resin | Crosslinked acrylic resin | Crosslinked acrylic resin | Crosslinked acrylic resin | Crosslinked acrylic resin | Crosslinked acrylic resin | Crosslinked acrylic resin |
| | | Average particle diameter [µm] | 0.8 | 0.8 | 0.8 | 0.8 | 0.8 | 0.8 | 0.8 |
| | | Formulation amount [parts by mass] | 0.1 | 0.5 | 1 | 2 | 0.5 | 0.5 | 0.5 |
| | Average thickness [µm] | | 27 | 27 | 27 | 27 | 27 | 27 | 27 |
| Surface layer | Formulation | Type of vinylidene fluoride-based resin | K740 | K740 | K740 | K740 | K740 | K740 | K740 |
| | | Blending amount [parts by mass] | 70 | 70 | 70 | 70 | 70 | 70 | 70 |
| | | Type of methacrylic acid ester-based resins | MGSS | MGSS | MGSS | MGSS | MGSS | MGSS | MGSS |
| | | Formulation amount [parts by mass] | 30 | 30 | 30 | 30 | 30 | 30 | 30 |
| | Average thickness [µm] | | 13 | 13 | 13 | 13 | 13 | 13 | 13 |
| Physical properties of film (laminate) | Blocking resistance | | ○ | ○ | ○ | ○ | ○ | ○ | ○ |
| | Arithmetic mean height on back layer side (Sa) [µm] | | 0.02 | 0.02 | 0.03 | 0.04 | 0.02 | 0.02 | 0.02 |
| | Number of convexities with a height of 0.2 µm or more from the average surface on the back layer side (per 697 × 539 µm area) | | 31 | 140 | 293 | 374 | 168 | 149 | 151 |
| | Number of convexities with a height of 1.0 µm or more from the average surface on the back layer side (per 697 × 539 µm area) | | 0 | 1 | 0 | 8 | 2 | 0 | 1 |
| | Total light transmittance [%] | | 93 | 93 | 93 | 93 | 93 | 93 | 93 |
| | Haze [%] | | 1.7 | 2.0 | 3.0 | 3.4 | 2.1 | 2.2 | 2.5 |
| | Maximum amount of recycled material that can be blended into the back layer [parts by mass] | | 0 | 0 | 0 | 0 | 2 | 5 | 7 |

**Table 1-2**

| (Continuation ofTable 1) | | | | | | | | | |
|---|---|---|---|---|---|---|---|---|---|
| | | | Example 8 | Example 9 | Example 10 | Comparative Example 1 | Comparative Example 2 | Comparative Example 3 | Comparative Example 4 |
| Back layer | Formulation | Type of methacrylic acid ester-based resins | HBS000 | HBS000 | HBS000 | HBS000 | HBS000 | HBS000 | HBS000 |
| | | Formulation amount [parts by mass] | 80 | 75 | 70 | 100 | 100 | 100 | 100 |
| | | Type of vinylidene fluoride-based resin | K720 | K720 | K720 | | | | |
| | | Formulation amount [parts by mass] | 20 | 25 | 30 | | | | |
| | | Type of UV absorbers | Tinuvin 1600 | Tinuvin 1600 | Tinuvin 1600 | Tinuvin 1600 | Tinuvin 1600 | Tinuvin 1600 | Tinuvin 1600 |
| | | Formulation amount [parts by mass] | 2.1 | 2.1 | 2.1 | 2.1 | 2.1 | 2.1 | 2.1 |
| | | Particle product number | MX-80H3wT | MX-80H3wT | MX-80H3wT | GM-0105 | GM-0105 | GM-0449S-2 | GM-0449S-2 |
| | | Particle material | Crosslinked acrylic resin | Crosslinked acrylic resin | Crosslinked acrylic resin | Crosslinked acrylic resin | Crosslinked acrylic resin | Crosslinked acrylic resin | Crosslinked acrylic resin |
| | | Average particle diameter [µm] | 0.8 | 0.8 | 0.8 | 2.5 | 2.5 | 3.7 | 3.7 |
| | | Formulation amount [parts by mass] | 0.5 | 0.5 | 0.5 | 1 | 0.5 | 1 | 0.5 |
| | Average thickness [µm] | | 27 | 27 | 27 | 27 | 27 | 27 | 27 |
| Surface layer | Formulation | Type of vinylidene fluoride-based resin | K740 | K740 | K740 | K740 | K740 | K740 | K740 |
| | | Blending amount [parts by mass] | 70 | 70 | 70 | 70 | 70 | 70 | 70 |
| | | Type of methacrylic acid ester-based resins | MGSS | MGSS | MGSS | MGSS | MGSS | MGSS | MGSS |
| | | Formulation amount [parts by mass] | 30 | 30 | 30 | 30 | 30 | 30 | 30 |
| | Average thickness [µm] | | 13 | 13 | 13 | 13 | 13 | 13 | 13 |
| Physical properties of film (laminate) | Blocking resistance | | ○ | ○ | ○ | ○ | ○ | ○ | o |
| | Arithmetic mean height on back layer side (Sa) [µm] | | 0.03 | 0.03 | 0.03 | 0.05 | 0.04 | 0.09 | 0.05 |
| | Number of convexities with a height of 0.2 µm or more from the average surface on the back layer side (per 697 × 539 µm area) | | 160 | 144 | 159 | 882 | 512 | 479 | 251 |
| | Number of convexities with a height of 1.0 µm or more from the average surface on the back layer side (per 697 × 539 µm area) | | 3 | 1 | 1 | 54 | 24 | 142 | 60 |
| | Total light transmittance [%] | | 93 | 93 | 93 | 93 | 93 | 93 | 93 |
| | Haze [%] | | 2_7 | 2.8 | 3.1 | 6.0 | 3.0 | 6.3 | 3.2 |
| | Maximum amount of recycled material that can be blended into the back layer [parts by mass] | | 12 | 16 | 21 | 0 | 0 | 0 | 0 |

**Table 1-3**

| (Continuation of Table 1) | | | | | | | | | |
|---|---|---|---|---|---|---|---|---|---|
| | | | Comparative Example 5 | Comparative Example 6 | Comparative Example 7 | Comparative Example 8 | Comparative Example 9 | Comparative Example 10 | Comparative Example 11 |
| Back layer | Formulation | Type of methacrylic acid ester-based resins | HBS000 | HBS000 | HBS000 | HBS000 | HBS000 | HBS000 | HBS000 |
| | | Formulation amount [parts by mass] | 100 | 100 | 100 | 65 | 60 | 80 | 100 |
| | | Type of vinylidene fluoride-based resin | | | | K720 | K720 | K720 | |
| | | Formulation amount [parts by mass] | | | | 35 | 40 | 20 | |
| | | Type of UV absorbers | Tinuvin 1600 | Tinuvin 1600 | Tinuvin 1600 | Tinuvin 1600 | Tinuvin 1600 | Tinuvin 1600 | Tinuvin 1600 |
| | | Formulation amount [parts by mass] | 2.1 | 2.1 | 2.1 | 2.1 | 2.1 | 2.1 | 2.1 |
| | | Particle product number | GM-0806S | GM-0806S | MX-80H3wT | MX-80H3wT | MX-80H3wT | | |
| | | Particle material | Crosslinked acrylic resin | Crosslinked acrylic resin | Crosslinked acrylic resin | Crosslinked acrylic resin | Crosslinked acrylic resin | | |
| | | Average particle diameter [µm] | 8.2 | 8.2 | 0.8 | 0.8 | 0.8 | | |
| | | Formulation amount [parts by mass] | 1 | 0.5 | 3 | 0.5 | 0.5 | | |
| | Average thickness [µm] | | 27 | 27 | 27 | 27 | 27 | 27 | 27 |
| Surface layer | Formulation | Type of vinylidene fluoride-based resin | K740 | K740 | K740 | K740 | K740 | K740 | K740 |
| | | Blending amount [parts by mass] | 70 | 70 | 70 | 70 | 70 | 70 | 70 |
| | | Type of methacrylic acid ester-based resins | MGSS | MGSS | MGSS | MGSS | MGSS | MGSS | MGSS |
| | | Formulation amount [parts by mass] | 30 | 30 | 30 | 30 | 30 | 30 | 30 |
| | Average thickness [µm] | | 13 | 13 | 13 | 13 | 13 | 13 | 13 |
| Physical properties of film (laminate) | Blocking resistance | | ○ | ○ | ○ | × | × | × | × |
| | Arithmetic mean height on back layer side (Sa) [µm] | | 0.21 | 0.16 | 0.04 | 0.04 | 0.03 | 0.03 | 0.03 |
| | Number of convexities with a height of 0.2 µm or more from the average surface on the back layer side (per 697 × 539 µm area) | | 234 | 196 | 465 | 132 | 144 | 10 | 7 |
| | Number of convexities with a height of 1.0 µm or more from the average surface on the back layer side (per 697 × 539 µm area) | | 106 | 87 | 3 | 0 | 1 | 3 | 0 |
| | Total light transmittance [%] | | 93 | 93 | 93 | 93 | 93 | 93 | 93 |
| | Haze [%] | | 6.7 | 3_3 | 3.4 | 12_0 | 12_1 | 1.7 | 1_6 |
| | Maximum amount of recycled material that can be blended into the back layer [parts by mass] | | 0 | 0 | 0 | 28 | 35 | 12 | 0 |

### Description of Reference Numerals

- 1: Film
- 10: Surface layer
- 20: Back layer

## Claims

1. A multilayer film, comprising:
a surface layer composed of a resin composition comprising 60 to 80 parts by mass of a vinylidene fluoride-based resin and 20 to 40 parts by mass of a methacrylic acid ester-based resin, with respect to a total of the vinylidene fluoride-based resin and the methacrylic acid ester-based resin of 100 parts by mass; and
a back layer laminated on the surface layer composed of a resin composition comprising 0 to 30 parts by mass of a vinylidene fluoride-based resin and 70 to 100 parts by mass of a methacrylic acid ester-based resin, with respect to a total of the vinylidene fluoride-based resin and the methacrylic acid ester-based resin of 100 parts by mass, and further comprising fine particles with a particle diameter of 0.2 µm or more;
wherein an average particle diameter of the fine particles is less than 1.0 µm,
wherein a number of convex portions existing on an outer surface of the back layer having a height of 0.2 µm or more relative to an average surface that is counted using a white interferometer is 400 or less per area of 697 µm × 539 µm, and
wherein a number of convex portions existing on the outer surface of the back layer having a height of 1.0 µm or more relative to the average surface that is counted using a white interferometer is 10 or less per area of 697 µm × 539 µm.

2. The multilayer film according to claim 1, wherein a content of the fine particles contained in the back layer is 0.1 parts by mass or more and 2 parts by mass or less, with respect to the total of 100 parts by mass of the vinylidene fluoride-based resin and the methacrylic acid ester-based resin in the back layer.

3. The multilayer film according to claim 1 or 2, wherein an arithmetic mean height (Sa) of the outer surface of the back layer according to ISO 25178, measured using a white interferometer, is 0.05 µm or less.

4. The multilayer film according to any one of claims 1 to 3, wherein a haze measured based on JIS K7136: 2000 is 5% or less.

5. A decorative film, comprising:
the multilayer film according to any one of claims 1 to 4, and
a decorative layer that is laminated directly or indirectly on a side of the back layer of the multilayer film and is provided with a design by one or more types selected from printing, vapor deposition, painting, laminating, and coloring.
